(19) **Europäisches Patentamt European Patent Office Office européen des brevets**

(11) **EP 1 648 121 B1**

(12) **EUROPEAN PATENT SPECIFICATION**

(45) Date of publication and mention
of the grant of the patent:
**16.12.2009 Bulletin 2009/51**

(51) Int Cl.:
***H04L 12/56*** *(2006.01)*

(21) Application number: **05022238.9**

(22) Date of filing: **12.10.2005**

(54) **Device in distributed wireless personal area network and data slot allocation method**

Vorrichtung in einem verteilten drahtlosen persönlichen Netzwerk und Verfahren zur Zeitschlitzzuteilung

Dispositif dans un réseau personnel sans fil distribué et procédé pour l'allocation d'intervalles de temps

(84) Designated Contracting States:
**DE FI FR GB SE**

(30) Priority: **03.05.2005 KR 2005037119**
**13.10.2004 US 617671 P**

(43) Date of publication of application:
**19.04.2006 Bulletin 2006/16**

(73) Proprietor: **Samsung Electronics Co., Ltd.**
**Suwon-si, Gyeonggi-Do (KR)**

(72) Inventors:
• **Kim, Yong-suk**
**Daejeon (KR)**
• **Cho, Jun-haeng**
**Seongnam-si**
**Gyeonggi-do (KR)**

(74) Representative: **Grünecker, Kinkeldey,**
**Stockmair & Schwanhäusser**
**Anwaltssozietät**
**Leopoldstrasse 4**
**80802 München (DE)**

(56) References cited:
EP-A- 0 603 099          WO-A-2004/095734
WO-A-2004/114598      US-A- 6 072 787
US-A1- 2004 156 312     US-B1- 6 788 702

• HIERTZ G R ET AL: "A new MAC Protocol for a wireless multi-hop broadband system beyond IEEE 802.11" WIRELESS WORLD RESEARCH FORUM, MEETING, XX, XX, July 2003 (2003-07), pages 1-6, XP002337515

**Description**

BACKGROUND OF THE INVENTION

1. Field of The Invention

The present invention relates generally to a device that transmits a data stream using an allocated data slot in a distributed wireless personal area network (WPAN) and a method for the data slot allocation. More particularly, the present invention relates to a device that regulates the number of data slots to be allocated in consideration of the number of the data slots required by neighbor devices and a method for the data slot allocation.

2. Description of The Related Art

In contrast to a local area network (LAN) or a wide area network (WAN) being widely known, a personal area network (PAN) is a network owned by an individual within a range of about 10 m. Devices owned by the individual are interconnected to construct a network in order to provide convenience for the owner. A wireless personal area network (WPAN) implements an existing PAN by wireless connection.

The Institute of Electrical and Electronics Engineers, Inc. (IEEE) 802.15 Working Group developed the WPAN for short distance wireless networks to standardize and implement the PAN. The IEEE 802.15 standard has four Task Groups. More particularly, IEEE 802.15.1 standardizes the well-known Bluetooth technology, whereas IEEE 802.15.3 and IEEE 802.15.3a standardize the high rate WPAN. Additionally, IEEE 802.15.4, alias ZigBee, standardizes low rate WPAN below 250 Kbps. The communication medium is shared by every device in the WPAN. In this regard, medium access control (MAC) is required to control the media access of the devices.

The MAC for the WPAN can be designed in two types of schemes: a centralized scheme and a distributed scheme. According to the centralized MAC scheme, the individual device operates for the whole network to manage and control the MAC for every device. In contrast, the distributed MAC scheme makes every device share the responsibility to manage the MAC.

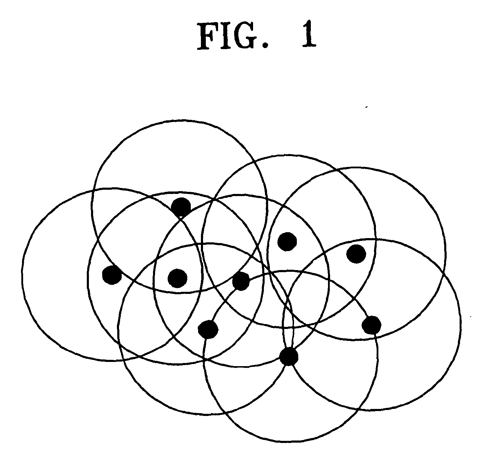

FIG. 1 is a conceptual diagram of a WPAN environment according to the distributed MAC scheme. In FIG. 1, a black dot indicates a device, and a circle drawn based on the dot indicates a transmission range of a beacon from a device. According to the distributed MAC scheme, the devices share required information in cooperation with each other for the sake of channel time reservation, synchronization, and so forth. The WPAN environment according to the distributed MAC scheme (hereinafter, referred to as a distributed WPAN) adopts a concept of timing called superframe.

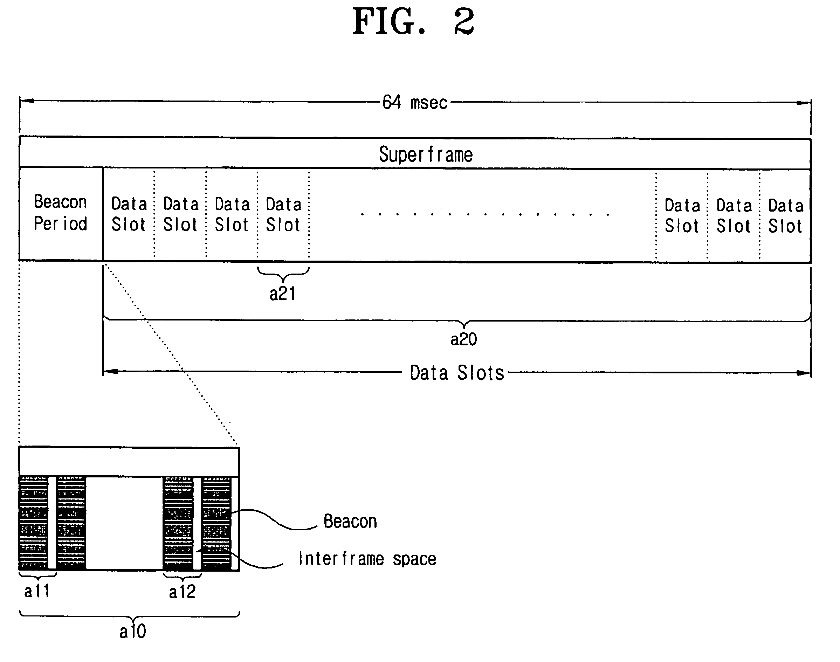

FIG. 2 depicts a structure of a conventional superframe.

Referring to FIG. 2, the superframe is structured as described in the Multiband Orthogonal Frequency Division Multiplexing (OFDM) Alliance draft v0.5. The superframe consists of 256 medium access slots (MAS). The superframe is 65.536 ms in length, and the MAS are 256 $\mu$s in length. Period 'a10' indicates a beacon period including beacon slots, and 'a20' is a data period including MAS used by other devices in the network to deliver a stream (data) to another device in the network. Hereinafter, the MAS in the beacon period is referred to as a beacon slot, and a MAS in the data period is referred to as a data slot. The devices can reserve and utilize a certain number of data slots.

Information as to the superframe is broadcast in the beacon slots of the beacon period allocated to a device. Neighbor devices take advantage of the superframe information received in a next superframe. A start time of the superframe depends on the beginning of the beacon period, which is defined as a beacon period start time (BPST).

In the distributed WPAN, a conventional device is assigned a certain number of data slots from the superframe as shown in FIG. 2 to satisfy a quality of service (QoS) requirement. In detail, the device transmits QoS information element (IE) via a common control channel such a beacon slot in the superframe. The QoS IE records information pertaining to a stream index designating a data stream delivered from the device, a required QoS (RMAS) requisite for the data stream delivery, and a desired QoS (DMAS) used to optimally transmit the data stream.

If the devices communicate with each other according to a same communication protocol, the modulation process, the demodulation process, and the data compression process are the same as well. Hence, the degree of QoS is proportional to the number of MAS. In this context, the reservation or allocation of QoS can imply the reservation or allocation of a certain number of MAS. Accordingly, it is possible to transmit the QoS IE with the number of required data slots and the number of desired data slots, instead of the required QoS and the desired QoS.

Upon receiving the QoS IE, the devices in the distributed WPAN record the information contained in the QoS IE received from another device in their memory. Next, the devices calculate the number of data slots or QoS to be assigned from a next superframe based on the recorded information. As the individual device requires a different number of required data slots and a different number of desired data slots, a solution is demanded to efficiently allocate the data slots.

For example, if the devices fairly distribute the data slots based on the number of devices that transmit the QoS IE, the data slots can be allocated as below.

[Table 1]

| Stream index | RMAS | DMAS | Serviced MAS |
|---|---|---|---|
| A (DEV 1 • •2) | 20 MAS | 40 MAS | 25 MAS |
| B (DEV 1 • •2) | 15 MAS | 30 MAS | 25 MAS |
| C (DEV 3 • •1) | 40 MAS | 80 MAS | 25 MAS |
| D (DEV4• •3) | 20 MAS | 40 MAS | 25 MAS |

In Table 1, when data streams A, B, C, and D are delivered in a network environment including four devices in total and the total number of MAS is 100, 25 MAS is allocated to each stream transmitted from the respective devices. RMAS of the data streams A, B, and D is 20, 15, and 20, respectively. DMAS of the data streams A, B, and D is 40, 30, and 40, respectively. As 25 MAS fairly distributed is below the DMAS but over the RMAS of each data stream, the data streams A, B, and D can be transmitted. As for the data stream C from the device 3 to the device 1, the RMAS is 40 MAS but only 25 MAS are allocated. As result, it is impossible to transmit the data stream C. As described above, under the conventional distributed WPAN, the data slots are not allocated according to the desired QoS for the provided service. Therefore, the fair allocation of the data slots cannot be attained.

US 2004/156312 A1 relates to techniques that may be used to allocate bandwidth in a network. Some examples include techniques of allocating bandwidth in a first node that is operable in an ad hoc wireless network configured to support at least one guaranteed feasible flow allocation. Some of these techniques include the step of initiating a communication between the first node and a second node in the network that, together, are endpoints of a link. The communication is related to possible bandwidth allocation adjustment of a flow sharing the link. Some of these techniques also include the step of determining, in the first node, a first new bandwidth allocation that approaches a first optimization condition for the flow. In addition, some of these techniques include the step of communicating with the second node to determine a mutually-agreed upon optimal bandwidth allocation for the flow. Further, some of these techniques include the steps of notifying neighbor nodes in the network of the mutually-agreed upon optimal bandwidth allocation when reallocation is needed and adopting the mutually-agreed upon optimal allocation for the flow when reallocation is needed (see for instance paragraph [0009]). In some examples, the local schedules of the wireless nodes are updated when network links are activated for adjusting the rate of one of their logical flows. If the rate adjustment is for a rate decrease, the indicated slot positions are assigned as idle in the local schedules of both endpoints and the rate adjustment is complete. If the rate adjustment is for a rate increase, these slot positions may have been borrowed from other links adjacent from both node endpoints. In the latter case, the endpoints request from their effected neighbors to set the corresponding slot positions as idle in their own local schedules and then the endpoints wait for acknowledgement from the neighbors.

US 6 072 787 A relates to high speed data transmission in a digital mobile communication system. In a mobile communication system employing a multi channel access technique, one or more traffic channels may be allocated to a mobile station for data transfer, in accordance with the data transfer rates required by the application using the mobile station. Minimum and maximum requirements are determined for the data transfer rate of the user data. The mobile communication network dynamically adjusts the channel configuration assignment to the mobile station for the data call, so as to consist of one or more traffic channels, within the limits of the minimum and maximum requirements of the data transfer rate, depending on the changing allocation state of the resources of the mobile communications network.

EP 0 603 099 A relates to techniques of requesting resources in a packet-switched network with minimal latency. A fast bandwidth reservation technique used in a packet-switched network that reserves bandwidth for a data transfer over links in a path between a source node, at least one intermediate node, and a destination node with minimal latency where the source node desires to send data to the destination node along the specific path using at least a minimum bandwidth and up to a maximum bandwidth is described. The goal of the technique is to reserve bandwidth for a data transfer in the minimal amount of time. No link on the path between the source node and the destination node has more bandwidth allocated for the resource node than minimum allocated for the previous forward links on the path. Links on the path between the source node and the destination node have their bandwidth allocation for the data transfer adjusted based on the final minimum bandwidth allocated for the data transfer.

SUMMARY OF THE INVENTION

It is the object of the present invention to improve prior art systems.
This object is solved by the subject matter of the independent claims.

Preferred embodiments are defined by the dependent claims.

The present invention has been provided to solve the above-mentioned and other problems and disadvantages occurring in the conventional arrangement, and an aspect of the present invention provides a device for fairly allocating data slots by calculating the number of data slots to be assigned from a next superframe in reference to the number of data slots required by neighbor devices and efficiently utilizing the entire data slot, and a method for the data slot allocation.

To achieve the above aspects of an exemplary embodiment of the present invention, a data slot allocation method for a plurality of devices in a distributed wireless personal area network (WPAN), includes transmitting and receiving, at the plurality of the devices, quality of service (QoS) information required to transmit a data stream via a common control channel, and allocating a certain number of data slots to the plurality of the devices based on the QoS information; additionally allocating a certain number of data slots to a first device when the first device transmitting a data stream is allocated data slots less than a number of required data slots for the data stream transmission; and reserving the additional data slots for the first device by reducing a number of data slots to be allocated to the other devices, excluding the first device, at a rate.

The QoS information may contain at least one of a data stream index, a number of required data slots, and a number of desired data slots.

The data slot allocation method may further include calculating, at the other devices, QoS satisfaction degree. The other devices may reserve the additional data slots for the first device by calculating a number of data slots in proportion to the calculated QoS satisfaction degree and subtracting the calculated number from a number of data slots allocated from a current superframe.

The data slot allocation method may further include joining, at a second device, the distributed WPAN; obtaining a total number of required data slots of streams delivered over the distributed WPAN and subtracting the obtained total number from a total number of data slots; and allocating a certain number of data slots to the second device when a number of required data slots of the second devices is below the result of the subtraction.

In accordance with another aspect of the present invention, a data slot allocation method for a device in a distributed wireless personal area network (WPAN), includes receiving from neighbor devices at least one of a data stream index, a number of required data slots, and a number of desired data slots; determining whether there is a first device among the neighbor devices, the first device transmitting a stream with allocated data slots less than the number of the required data slots; and calculating a number of data slots to be allocated from a next superframe to fall below a number of data slots allocated from a current superframe when there is the first device.

The calculation of the number of the data slots allocated from the next superframe may include calculating quality of service (QoS) satisfaction degree; calculating a number of data slots in proportion to the QoS satisfaction degree; and subtracting the calculated number of the data slots from a number of data slots allocated from the current superframe.

In accordance with still another aspect of the present invention, a device operating in a distributed wireless personal area network (WPAN), includes a communication section for receiving from neighbor devices quality of service (QoS) information that contains at least one of a data stream index, a number of required data slots, and a number of desired data slots; a determination section for determining whether there is a first device among the neighbor devices, the first device allocated data slots less than the number of the required data slots; and a controller for calculating a number of data slots to be allocated from a next superframe to fall below a number of data slots allocated from a current superframe when there is the first device.

The controller may calculate QoS satisfaction degree, and calculate a number of data slots to be allocated from the next superframe by calculating a number of data slots in proportion to the calculated QoS satisfaction degree and subtracting the calculated number of the data slots from the number of the data slots allocated from the current superframe.

The communication section may receive the QoS information via a common control channel.

BRIEF DESCRIPTION OF THE DRAWINGS

These and/or other aspects of the invention will become apparent and more readily appreciated from the following description of exemplary embodiments, taken in conjunction with the accompanying drawings of which:

FIG. 1 is a conceptual diagram of a structure of a distributed wireless personal area network (WPAN);

FIG. 2 is a conceptual diagram of a superframe used in the distributed WPAN;

FIG. 3 is a conceptual diagram of a distributed WPAN according to an exemplary embodiment of the present invention;

FIG. 4 is a flowchart explaining a data slot allocation method in the distributed WPAN according to an exemplary embodiment of the present invention; and

FIG. 5 is a block diagram of a device in the distributed WPAN according to an exemplary embodiment of the present invention.

## DETAILED DESCRIPTION OF EXEMPLARY EMBODIMENTS OF THE PRESENT INVENTION

Certain exemplary embodiments of the present invention will now be described in greater detail with reference to the accompanying drawings.

In the following description, same drawing reference numerals are used for the same elements even in different drawings. The matters defined in the description, such as detailed construction and element descriptions, are provided to assist in a comprehensive understanding of the invention. Also, well-known functions or constructions are not described in detail since they would obscure the invention in unnecessary detail.

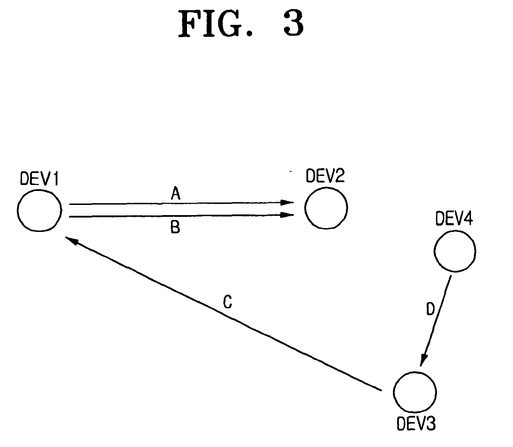

FIG. 3 is a conceptual diagram illustrating how a data stream is delivered between devices in a distributed wireless personal area network (WPAN) according to an exemplary embodiment of the present invention. In FIG. 3, a device 1 (DEV1) through a device 4 (DEV4) transmit a data stream A through a data stream D. Specifically, the DEV1 transmits the data streams A and B to the DEV2, the DEV3 transmits the data stream C to the DEV1, and the DEV4 transmits the data stream D to the DEV3. The individual device is allocated a certain number of data slots in a superframe for its transmitted streams. In this situation, if all the devices are assigned the required number of data slots for the data stream transmission, a particular device may not be allocated the required data slots requisite for the data stream transmission.

According to an exemplary embodiment of the present invention, if there is a particular device without the required data slots allocated in FIG. 3, the other devices reduce their data slots to be allocated to their data streams such that the number of the allocated data slots can meet the number of the required data slots of the particular device.

To this end, the devices in FIG. 3 transmit and receive their quality of service (QoS) information via a common control channel. The QoS information pertains to information to ensure QoS of the data stream to be transmitted from the device.

In particular, the QoS information may be a data stream index designating the data stream to be transmitted, the number of required data slots required for the data stream transmission, and the number of desired data slots to optimally transmit the data stream.

Suppose that each device has the same data transmission rate in conformity with the same communication protocol, the QoS is proportional to the MAS. Hence, the QoS information can be the data stream index, the required QoS, and the desired QoS. In an exemplary embodiment of the present invention, it is assumed that each device has the same transmission rate, that is, conforms to the same communication protocol, to calculate the QoS to be allocated to the devices in proportion to the QoS information of the other devices, that is, to calculate the number of data slots. Hereinafter, the descriptions are provided based on the MAS with respect to the entire device.

For example, suppose that the data slots of a current superframe are allocated as shown in Table 1, the DEV3 cannot transmit the data stream C. To prevent this, a certain number of data slots are additionally allocated to the DEV3 to obtain the required data slots. The DEVs 1, 2, and 4 reduce their allocated data slots to obtain the additional data slots for the DEV3.

To obtain the additional data slots for the DEV3, the DEVs 1, 2, and 4 calculate satisfaction degree of their QoS ratios based on Equation 1.

$$[\text{Equation } 1]$$

$$SOQ(n) = \frac{S(n) - R(n)}{D(n) - R(n)}$$

In Equation 1, n is a superframe number, SOQ(n) is a satisfaction degree of QoS at an n-th superframe, R(n) is the number of the required data slots at the n-th superframe, D(n) is the number of the desired data slots at the n-th superframe, and S(n) is the number of the data slots allocated from the n-th superframe.

Note that the number of the additional data slots for the DEV3 is 15 MAS in Table 1. The DEVs 1, 2, and 4 calculate the number of the data slots in proportion to the calculated QoS satisfaction degree from the additional 15 MAS for the DEV3, and subtract the calculated number from the number of the allocated data slots of the current superframe.

For instance, as for the DEV1 in Table 1, its QoS satisfaction degree is (25-20)/(40-20)=1/4. The multiplication of the additional 15 MAS by 1/4 equals to 3.75 and is rounded up to 4. The DEV1 subtracts 4 MAS from the allocated data slots of the current superframe. That is, the DEV1 calculates the number of the data slots allocated from a next superframe to 21 MAS. The regulated number of the data slots is shown in Table 2.

[Table 2]

| Stream index | RMAS | DMAS | Serviced MAS | Allocating MAS |
|---|---|---|---|---|
| A (DEV 1 • • 2) | 20 MAS | 40 MAS | 25 MAS | 21 MAS |
| B (DEV 1 • • 2) | 15 MAS | 30 MAS | 25 MAS | 18 MAS |
| C (DEV 3 • • 1) | 40 MAS | 80 MAS | 25 MAS | 40 MAS |
| D (DEV4 • • 3) | 20 MAS | 40 MAS | 25 MAS | 21 MAS |

To facilitate the calculation of the data slots, let the total number of the data slots be 100 in Table 2. In Table 2, the data streams A and D require 20 MAS for the transmission. Hence, the allocated 21 MAS are enough for the transmission. 18 MAS are enough for the data stream B that requires 15 MAS.

As mentioned above, 15 MAS can be additionally allocated to the data stream C by regulating the number of the allocating data slots of the next superframe with respect to the data streams A, B, and D. As a result, the DEV3 is assigned 40 MAS to meet the number of the required data slots and is able to successfully transmit the data stream C.

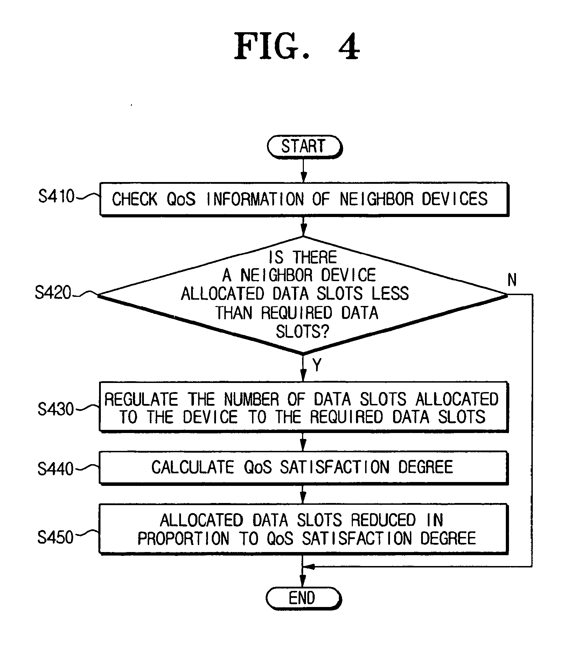

FIG. 4 is a flowchart explaining a data slot allocation method in the distributed WPAN according to an exemplary embodiment of the present invention. Referring to FIG. 4, the device under the network environment checks the QoS information of the neighbor devices (S410).

The device determines whether there is a neighbor device that transmits a stream with the allocated data slots less than the required data slots (S420). If a first device is assigned the data slots less than the required data slots (i.e., the minimum data slots for use) for the transmission of a first stream, the number of the data slots to be allocated to the first device, that is, the data slots to the first stream is increased in a next superframe and the required data slots are provided (S430).

Next, the device calculates the QoS satisfaction degree by substituting the number of its required data slots, the number of its desired data slots, and the number of the data slots allocated in the current superframe into Equation 1 (S440).

The number of the data slots is reduced in proportion to the QoS satisfaction degree (S450). To reserve the additional data slots for the first stream, the other devices, excluding the first device transmitting the first stream, relinquish data slots in proportion to the calculated QoS satisfaction degree from data slots for their streams.

To this end, the devices calculate their data slots using the QoS information of the neighbor devices, which is received via the common control channel, based on a common arithmetic expression, that is, Equation 1. Therefore, the data slots of the superframe can be efficiently allocated.

Meanwhile, if a new second device attempts to access the distributed WPAN, the second device provides its data stream index, the number of the required data slots, and the number of the desired data slots in the beacon period. The access of the second device depends on whether the data slots allocated to the second device exceeds the number of the required data slots. For instance, when a value obtained by subtracting the total number of the required data slots of the entire stream currently transmitted over the distributed WPAN, from the total number of the data slots, falls below the number of the required data slots of the second device, the access of the second device fails. Hence, the second device withdraws its data slot allocation request. Conversely, if the subtraction result exceeds the number of the required data slots, the second devices attains the successful access. In this case, the individual device regulates the number of the data slots to be allocated from a next superframe to the number of its required data slots.

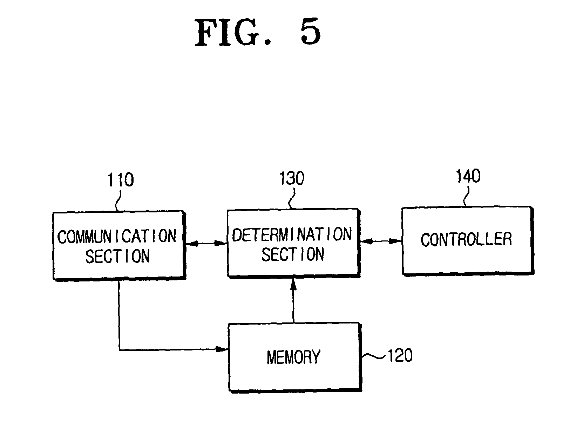

FIG. 5 is a block diagram of a device according to an exemplary embodiment of the present invention. The device operates under the distributed WPAN. Referring to FIG. 5, the device includes a communication section 110, a determination section 130, a controller 140, and a memory 120.

The communication section 110 communicates with neighbor devices according to the Institute of Electrical and Electronics Engineers, Inc. (IEEE) 802.15 standard. The communication section 110 receives the QoS information from other devices via the common control channel. As for the superframe, the beacon period may be used as the common control channel.

The determination section 130, upon receiving the QoS information in the beacon period of the current superframe, determines whether there is a first device, among the devices, allocated data slots less than its required data slots for the stream transmission.

The controller 140 calculates the number of the data slots to be allocated in the next superframe according to the determination at the determination section 130. When the presence of the first device is determined at the determination section 130, the controller 140 calculates the number of the data slots allocated from the next superframe that fall below the number of the data slots allocated from the current superframe. As a result, the additional data slots are reserved for the stream transmitted by the first device so that the first device can obtain the required data slots.

The memory 120 records the QoS information received from the devices. The number of the allocated data slots in the current superframe may be recorded together. Suppose that the data slots are fairly allocated in the current superframe, the memory 120 may record the information as shown in Table 1.

Based on the information recorded in the memory 120 as shown in Table 1, the determination section 130 determines that the data stream C of the DEV3 is allocated 15 MAS below the required data slots 40 MAS.

Next, the controller 140 regulates the number of the data slots to be allocated to the data stream C from the next superframe, to 40 MAS. To reserve the additional 15 MAS (40-25= 15) for the data stream C, the controller 140 calculates the number of the data slots below the number of the allocated data slots in the current superframe. In particular, if the device is the DEV1 in Table 1, the controller 140 calculates the number of the data slots allocated from the next superframe to 21 MAS. The calculated number of the data slots is allocated from the next superframe. The data slot allocation is executed through interaction with other devices according to the characteristic of the distributed network. In further detail, when the number of the data slots to be allocated from the next superframe is regulated, the controller 140 broadcasts the beacon signal, which requests the data slot allocation with the regulated number, in the beacon period to the neighbor devices and is assigned the data slots. As a result, the DEV3 in Table 1 can transmit the data stream C with as many allocated data slots as the required data slots.

In light of the foregoing as set forth above, if there is a device without the required data slots, other devices regulate their allocated data slots. Accordingly, the devices under the distributed WPAN can efficiently use the entire data slot and the fair allocation of the data slots can be realized.

Although a few exemplary embodiments of the present general inventive concept have been shown and described, it will be appreciated by those skilled in the art that changes may be made in these exemplary embodiments without departing from the principles of the general inventive concept, the scope of which is defined in the appended claims and their equivalents.

**Claims**

1. A data slot allocation method for a plurality of devices in a distributed wireless personal area network, WPAN, the method comprising:

   transmitting and receiving in a beacon period of a current superframe, at the plurality of the devices, quality of service, Qos, information required to transmit data streams, wherein the transmission and reception of the QoS information is performed by devices intended to be allocated with data slots, and allocating a first number of data slots to the plurality of the devices based on the QoS information wherein the QoS information contains at least one of a data stream index designating a data stream, the number of required data slots; and a number of desired data slots;
   calculating, at the other devices, a QoS satisfaction degree based on an equation;

$$SOQ(n) = \frac{S(n) - R(n)}{D(n) - R(n)}$$

   where n is a superframe number, *SOQ(n)* is a satisfaction degree of QoS at an n-th superframe, *R(n)* is the number of the required data slots at the n-th superframe, *D(n)* is the number of the desired data slots at the n-th superframe, and *S(n)* is a number of the data slots allocated from the n-th superframe; additionally allocating a second number of data slots to a first device when the first device transmitting one of the data streams is allocated data slots less than a number of required data slots for the data stream transmission; and
   reserving the additionally allocated data slots for the first device by reducing a number of data slots to be allocated to other devices in a next superframe;

   wherein the other devices reserve the additionally allocated data slots for the first device by calculating the second specific number of data slots in proportion to the calculated QoS satisfaction degree and subtracting the calculated second specific number of data slots from a number of data slots allocated from a current superframe
   wherein the superframe comprises a beacon period including beacon slots and a data period including the data slots.

2. The data slot allocation method of claim 1, further comprising:

   joining, at a second device, the distributed WPAN;

obtaining the number of required data slots of streams delivered over the distributed WPAN and subtracting the obtained number of required data slots from a total number of data slots; and

allocating a third specific number of data slots to the second device when the number of required data slots of the second devices is less than the result of the subtraction.

3. A data slot allocation method for a device in a distributed wireless personal area network, WPAN, the method comprising:

receiving from neighbor devices quality of service, QoS, information in a beacon period of a current superframe, wherein the superframe comprises a beacon period including beacon slots and a data period including the data slots, the QoS information containing at least one of a data stream index designating a data stream, a number of required data slots, and a number of desired data slots;

determining whether there is a first device among the neighbor devices, the first device transmitting a stream with allocated data slots less than the number of the required data slots; and

calculating a number of data slots to be allocated from a next superframe that fall below a number of data slots allocated from the current superframe if it is determined that the first device transmits the stream with allocated data slots less than the number of the required data slots, wherein the calculation of the number of the data slots allocated from the next superframe comprises:

calculating QoS satisfaction degree based on an equation,

$$SOQ(n) = \frac{S(n) - R(n)}{D(n) - R(n)}$$

where $n$ is a superframe number, $SOQ(n)$ is a QoS satisfaction degree at an n-th superframe, $R(n)$ is the number of required data slots at the n-th superframe, $D(n)$ is the number of desired data slots at the n-th superframe, and $S(n)$ is a number of data slots allocated from the n-th superframe;

calculating the number of data slots allocated from the next superframe in proportion to the QoS satisfaction degree; and

subtracting the calculated number of the data slots allocated from the next superframe from the number of data slots allocated from the current superframe.

4. A device operating in a distributed wireless personal area network, WPAN, comprising:

a communication section (110) which receives from neighbor devices quality of service, QoS, information in a beacon period of a current superframe, wherein the superframe comprises a beacon period including beacon slots and a data period including the data slots, the QoS information containing at least one of a data stream index designating a data stream, a number of required data slots, and a number of desired data slots;

a determination section (130) which determines whether there is a first device among the neighbor devices, the first device transmitting a stream with allocated data slots less than the number of required data slots; and

a controller which calculates (140) a number of data slots to be allocated from a next superframe that fall below a number of data slots allocated from the current superframe if it is determined that the first device transmits the stream with allocated data slots less than the number of the required data slots, wherein the controller calculates QoS satisfaction degree based on an equation,

$$SOQ(n) = \frac{S(n) - R(n)}{D(n) - R(n)}$$

where $n$ is a superframe number, $SOQ(n)$ is a QoS satisfaction degree at an n-th superframe, $R(n)$ is a number of required data slots at the n-th superframe, $D(n)$ is a number of desired data slots at the n-th superframe, and $S(n)$ is a number of data slots allocated from the n-th superframe,

and the controller calculates the number of data slots to be allocated from the next superframe by calculating the number of data slots to be allocated from the next superframe in proportion to the calculated QoS satisfaction degree and subtracting the calculated number of the data slots to be allocated from the next superframe from the number of the data slots allocated from the current superframe.

**5.** The device of claim 4, wherein the beacon period is used as a common control channel.

**Patentansprüche**

**1.** Datenschlitz-Zuweisungsverfahren für eine Vielzahl von Vorrichtungen in einem verteilten WPAN (wireless personal area network), wobei das Verfahren umfasst:

Senden und Empfangen von Dienstgüte-Informationen, die erforderlich sind, um Datenstreams zu senden, in einer Beacon-Periode eines aktuellen Superframe an der Vielzahl von Vorrichtungen, wobei das Senden und Empfangen der Dienstgüte-Informationen durch Vorrichtungen durchgeführt wird, denen Daten-Schlitze zugewiesen werden sollen, sowie Zuweisen einer ersten Anzahl von Daten-Schlitzen zu der Vielzahl der Vorrichtungen auf Basis der Dienstgüte-Informationen, wobei die Dienstgüte-Informationen wenigstens einen Datenstream-Index beinhalten, der einen Datenstream, die Anzahl erforderlicher Daten-Schlitze und eine Anzahl gewünschter Daten-Schlitze angibt;
Berechnen eines Dienstgüte-Erfüllungsgrades an den anderen Vorrichtungen auf Basis einer Gleichung

$$SOQ(n) = \frac{S(n) - R(n)}{D(n) - R(n)}$$

wobei *n* eine Superframe-Zahl ist, *SOQ(n)* ein Dienstgüte-Erfüllungsgrad in einem n-ten Superframe ist, *R(n)* die Anzahl der erforderlichen Daten-Schlitze in dem n-ten Superframe ist, *D(n)* die Anzahl der gewünschten Daten-Schlitze in dem n-ten Superframe ist und *S(n)* eine Anzahl der von dem n-ten Superframe zugewiesenen Daten-Schlitze ist; zusätzlich Zuweisen einer zweiten Anzahl von Daten-Sclilitzen zu einer ersten Vorrichtung, wenn der ersten Vorrichtung, die einen der Datenstreams sendet, weniger Daten-Schlitze als eine Anzahl für das Senden des Datenstream erforderlicher Daten-Schlitze zugewiesen werden; und
Reservieren der zusätzlich zugewiesenen Daten-Schlitze für die erste Vorrichtung durch Reduzieren einer Anzahl von Daten-Schlitzen, die anderen Vorrichtungen in einem nächsten Superframe zugewiesen werden sollen;
wobei die anderen Vorrichtungen die zusätzlich zugewiesenen Daten-Schlitze für die erste Vorrichtung durch Berechnen der zweiten spezifischen Anzahl von Daten-Schlitzen proportional zu dem berechneten Dienstgüte-Erfüllungsgrad und Subtrahieren der berechneten zweiten spezifischen Anzahl von Daten-Schlitzen von einer Anzahl von Daten-Schlitzen, die von einem aktuellen Superframe zugewiesen werden, reservieren, und der Superframe eine Beacon-Periode, die Beacon-Schlitze enthält, sowie eine Daten-Periode umfasst, die die Daten-Schlitze enthält.

**2.** Datenschlitz-Zuweisungsverfahren nach Anspruch 1, das des Weiteren umfasst:

Beitreten zu dem verteilten WPAN an der zweiten Vorrichtung;
Ermitteln der Anzahl erforderlicher Daten-Schlitze von Streams, die über das verteilte WPAN geliefert werden, und Subtrahieren der ermittelten Anzahl erforderlicher Daten-Schlitze von einer Gesamtzahl von Daten-Schlitzen; und
Zuweisen einer dritten spezifischen Anzahl von Daten-Schlitzen zu der zweiten Vorrichtung, wenn die Anzahl erforderlicher Daten-Schlitze der zweiten Vorrichtungen kleiner ist als das Ergebnis der Subtraktion.

**3.** Verfahren zum Zuweisen von Daten-Schlitzen für eine Vorrichtung in einem verteilten WPAN (wireless personal area network), wobei das Verfahren umfasst:

Empfangen von Dienstgüte-Informationen von benachbarten Vorrichtungen in einer Beacon-Periode eines aktuellen Superframe, wobei der Superframe eine Beacon-Periode, die Beacon-Schlitze enthält, sowie eine Daten-Periode umfasst, die die Daten-Schlitze enthält, und die Dienstgüte-Informationen wenigstens einen Datenstream-Index beinhalten, der einen Daten-Stream, eine Anzahl erforderlicher Daten-Schlitze und eine Anzahl gewünschter Daten-Schlitze angibt;
Feststellen, ob sich unter den benachbarten Vorrichtungen eine erste Vorrichtung befindet, wobei die erste Vorrichtung einen Stream mit weniger zugewiesenen Daten-Schlitzen als der Anzahl der erforderlichen Daten-Schlitze sendet; und

Berechnen einer Anzahl von Daten-Schlitzen, die von einem nächsten Superframe zuzuweisen sind und die unter einer Anzahl von Daten-Schlitzen liegen, die von dem aktuellen Superframe zugewiesen werden, wenn festgestellt wird, dass die erste Vorrichtung den Stream mit weniger zugewiesenen Daten-Schlitzen als der Anzahl der erforderlichen Daten-Schlitze sendet, wobei die Berechnung der Anzahl der von dem nächsten Superframe zugewiesenen Daten-Schlitze umfasst:

Berechnen eines Dienstgüte-Erfüllungsgrades auf Basis einer Gleichung

$$SOQ(n) = \frac{S(n) - R(n)}{D(n) - R(n)}$$

wobei $n$ eine Superframe-Nummer ist, $SOQ(n)$ ein Dienstgüte-Erfüllungsgrad in dem n-ten Superframe ist, $R(n)$ die Anzahl erforderlicher Daten-Schlitze in dem n-ten Superframe ist, $D(n)$ die Anzahl gewünschter Daten-Schlitze in dem n-ten Superframe ist und $S(n)$ eine Anzahl von dem n-ten Superframe zugewiesener Daten-Schlitze ist;
Berechnen der Anzahl von dem nächsten Superframe zugewiesener Daten-Schlitze proportional zu dem Dienstgüte-Erfüllungsgrad; und
Subtrahieren der berechneten Anzahl der Daten-Schlitze, die von dem nächsten Superframe zugewiesen werden, von der Anzahl von Daten-Schlitzen, die von dem aktuellen Superframe zugewiesen werden.

4.  Vorrichtung, die in einem verteilten WPAN (wireless personal area network) arbeitet, wobei sie umfasst:

einen Kommunikationsabschnitt (110), der von benachbarten Vorrichtungen Dienstgüte-Informationen in einer Beacon-Periode eines aktuellen Superframe empfängt, wobei der Superframe eine Beacon-Periode, die Beacon-Schlitze enthält, sowie eine Daten-Periode umfasst, die die Daten-Schlitze enthält, und die Dienstgüte-Informationen wenigstens einen Datenstream-Index beinhalten, der einen Datenstream, eine Anzahl erforderlicher Daten-Schlitze sowie eine Anzahl gewünschter Daten-Schlitze angibt;
einen Feststellabschnitt (130), der feststellt, ob sich unter den benachbarten Vorrichtungen eine erste Vorrichtung befindet, wobei die erste Vorrichtung einen Stream mit weniger zugewiesenen Daten-Schlitzen als der Anzahl erforderlicher Daten-Schlitze sendet; und
eine Steuereinrichtung (140), die eine Anzahl von Daten-Schlitzen berechnet, die von einem nächsten Superframe zuzuweisen sind und die unter einer Anzahl von Daten-Schlitzen liegen, die von dem aktuellen Superframe zugewiesen werden, wenn festgestellt wird, dass die erste Vorrichtung den Stream mit weniger zugewiesenen Daten-Schlitzen als der Anzahl der erforderlichen Daten-Schlitze sendet, wobei die Steuereinrichtung den Dienstgüte-Erfüllungsgrad auf Basis einer Gleichung

$$SOQ(n) = \frac{S(n) - R(n)}{D(n) - R(n)}$$

berechnet,

wobei n eine Superframe-Nummer ist, $SOQ(n)$ ein Dienstgüte-Erfüllungsgrad in einem n-ten Superframe ist, $R(n)$ eine Anzahl erforderlicher Daten-Schlitze in dem n-ten Superframe ist, $D(n)$ eine Anzahl gewünschter Daten-Schlitze in dem n-ten Superframe ist und $S(n)$ eine Anzahl von dem n-ten Superframe zugewiesener Daten-Schlitze ist, und die Steuereinrichtung die Anzahl von dem nächsten Superframe zuzuweisender Daten-Schlitze berechnet, indem sie die Anzahl von dem nächsten Superframe zuzuweisender Daten-Schlitze proportional zu dem berechneten Dienstgüte-Erfüllungsgrad berechnet und die berechnete Anzahl der Daten-Schlitze, die von dem nächsten Superframe zuzuweisen sind, von der Anzahl der Daten-Schlitze subtrahiert, von der die aktuellen Superframe zugewiesen werden.

5.  Vorrichtung nach Anspruch 4, wobei die Beacon-Periode als ein Common Control Channel verwendet wird.

**Revendications**

1. Un procédé d'allocation d'intervalles de données pour une pluralité d'appareils dans un réseau personnel sans fil distribué, WPAN (« wireless personal area network »), le procédé comprenant les étapes consistant à :

   transmettre et recevoir sur une période balise d'une supertrame courante, au niveau de la pluralité d'appareils, une information relative à la qualité de service, QoS (« Quality of Service »), requise pour transmettre des flux de données, où la transmission et la réception de l'information relative à la QoS sont exécutées par des appareils auxquels des intervalles de données doivent être alloués, et allouer un premier nombre d'intervalles de données à la pluralité des appareils sur la base de l'information relative à la QoS,
   où l'information relative à la QoS comporte au moins un parmi un indice de flux de données désignant un flux de données, le nombre d'intervalles de données requis, et un nombre d'intervalles de données souhaités ;
   calculer, au niveau des autres appareils, un degré de satisfaction quant à la qualité de service QoS sur la base d'une équation ;

$$SOQ(n) = \frac{S(n)-R(n)}{D(n)-R(n)}$$

   où $n$ est un numéro de supertrame, où **SOQ(n)** est un degré de satisfaction relatif à la QoS à la $n^{\text{ième}}$ supertrame, **R(n)** est le nombre des intervalles de données requis à la $n^{\text{ième}}$ supertrame, **D(n)** est le nombre des intervalles de données souhaités à la $n^{\text{ième}}$ supertrame, et **S(n)** est un nombre des intervalles de données alloués à partir de la $n^{\text{ième}}$ supertrame ;
   allouer additionnellement un deuxième nombre d'intervalles de données à un premier appareil lorsque des intervalles de données inférieurs à un nombre d'intervalles de données requis pour la transmission des flux de données sont alloués au premier appareil transmettant un des flux de données; et
   réserver des intervalles de données alloués additionnellement pour le premier appareil en réduisant un nombre d'intervalles de données à allouer à d'autres appareils dans une prochaine supertrame ;

   où les autres appareils réservent les intervalles de données alloués additionnellement pour le premier appareil, en calculant le deuxième nombre spécifique d'intervalles de données en fonction du degré de satisfaction relatif à la QoS calculé et en soustrayant le deuxième nombre spécifique d'intervalles de données calculé d'un nombre d'intervalles de données alloués à partir d'une supertrame courante ;
   où la supertrame comprend une période balise incluant des intervalles balise et une période de données incluant les intervalles de données.

2. Le procédé d'allocation d'intervalles de données selon la revendication 1, comprenant en outre les étapes consistant à:

   rejoindre, au niveau d'un deuxième appareil, le WPAN distribué ;
   obtenir le nombre d'intervalles de données requis de flux délivrés sur le WPAN distribué et soustraire le nombre obtenu d'intervalles de données requis d'un nombre total d'intervalles de données ; et
   allouer un troisième nombre spécifique d'intervalles de données au deuxième appareil lorsque le nombre d'intervalles de données requis des deuxièmes appareils est inférieur au résultat de la soustraction.

3. Un procédé d'allocation d'intervalles de données pour un appareil dans un réseau personnel sans fil distribué, WPAN (« wireless personal area network ») , le procédé comprenant les étapes consistant à:

   recevoir à partir d'appareils voisins une information relative à la qualité de service, QoS (« Quality of Service »), sur une période balise d'une supertrame courante, où la supertrame comprend une période balise incluant des intervalles balises et une période de données incluant les intervalles de données, l'information relative à la QoS comportant au moins un parmi un indice de flux de données désignant un flux de données, un nombre d'intervalles de données requis, et un nombre d'intervalles de données souhaités ;
   déterminer s'il y a un premier appareil parmi les appareils voisins, le premier appareil transmettant un flux avec des intervalles de données alloués en nombre inférieur au nombre d'intervalles de données requis ; et
   calculer un nombre d'intervalles de données à allouer à partir d'une prochaine supertrame qui tombent en dessous d'un nombre d'intervalles de données alloués à partir de la supertrame courante s'il est déterminé que le premier appareil transmet le flux avec des intervalles de données alloués en plus petit nombre que le nombre des intervalles de données requis, où le calcul du nombre des intervalles de données alloués à partir de la prochaine supertrame comprend les étapes consistant à :

calculer un degré de satisfaction relatif à la QoS sur la base d'une équation,

$$SOQ(n) = \frac{S(n)-R(n)}{D(n)-R(n)}$$

où $n$ est un numéro de supertrame, $SOQ(n)$ est un degré de satisfaction relatif à la QoS à une $n^{ième}$ supertrame, $R(n)$ est le nombre d'intervalles de données requis à la $n^{ième}$ supertrame, $D(n)$ est le nombre d'intervalles de données souhaités à la $n^{ième}$ supertrame, et $S(n)$ est un nombre d'intervalles de données alloués à partir de la $n^{ième}$ supertrame ;

calculer le nombre d'intervalles de données alloués à partir de la prochaine supertrame en fonction du degré de satisfaction relatif à la QoS ; et

soustraire le nombre calculé d'intervalles de données alloués à partir de la prochaine supertrame du nombre d'intervalles de données alloués à partir de la supertrame courante.

4. Un appareil opérant dans un réseau personnel sans fil distribué, WPAN (« wireless personal area network »), comprenant :

une section de communication (110) qui reçoit à partir d'appareils voisins une information relative à la qualité de service, QoS (« Quality of Service »), sur une période balise d'une supertrame courante, où la supertrame comprend une période balise incluant des intervalles balises et une période de données incluant les intervalles de données, l'information relative à la QoS comportant au moins un parmi un index de flux de données désignant un flux de données, un nombre d'intervalles de données requis, et un nombre d'intervalles de données souhaités ;

une section de détermination (130) qui détermine s'il y a un premier appareil parmi les appareils voisins, le premier appareil transmettant un flux avec des intervalles de données alloués en plus petit nombre que le nombre d'intervalles de données requis ; et

un contrôleur qui calcule (140) un nombre d'intervalles de données à allouer à partir d'une prochaine supertrame qui tombent en dessous d'un nombre d'intervalles de données alloués à partir de la supertrame courante s'il est déterminé que le premier appareil transmet le flux avec des intervalles de données alloués en plus petit nombre que le nombre des intervalles de données requis, où le contrôleur calcule le degré de satisfaction relatif à la QoS sur la base d'une équation,

$$SOQ(n) = \frac{S(n)-R(n)}{D(n)-R(n)}$$

où $n$ est un numéro de supertrame, $SOQ(n)$ est un degré de satisfaction relatif à la QoS à une $n^{ième}$ supertrame, $R(n)$ est un nombre d'intervalles de données requis à la $n^{ième}$ supertrame, $D(n)$ est un nombre d'intervalles de données souhaités à la $n^{ième}$ supertrame, et $S(n)$ est un nombre d'intervalles de données alloués à partir de la $n^{ième}$ supertrame ,

et le contrôleur calcule le nombre d'intervalles de données à allouer à partir de la prochaine supertrame en calculant le nombre d'intervalles de données à allouer à partir de la prochaine supertrame en fonction du degré de satisfaction calculé relatif à la QoS et en soustrayant le nombre calculé d'intervalles de données à allouer à partir de la prochaine supertrame du nombre d'intervalles de données alloués à partir de la supertrame courante.

5. L'appareil selon la revendication 4, où la période balise est utilisée comme canal de contrôle commun.

FIG. 1

# FIG. 2

# FIG. 3

# FIG. 4

```
                          ( START )
                              │
                              ▼
S410 ──┤  CHECK QoS INFORMATION OF NEIGHBOR DEVICES  │
                              │
                              ▼
                        ╱  IS THERE  ╲
                      ╱  A NEIGHBOR DEVICE  ╲              N
S420 ──┤  ALLOCATED DATA SLOTS LESS  ├──────────┐
                      ╲  THAN REQUIRED DATA  ╱             │
                        ╲   SLOTS?  ╱                      │
                              │ Y                          │
                              ▼                            │
S430 ──┤  REGULATE THE NUMBER OF DATA SLOTS ALLOCATED  │   │
           TO THE DEVICE TO THE REQUIRED DATA SLOTS        │
                              │                            │
                              ▼                            │
S440 ──┤  CALCULATE QoS SATISFACTION DEGREE  │             │
                              │                            │
                              ▼                            │
S450 ──┤  ALLOCATED DATA SLOTS REDUCED IN  │               │
           PROPORTION TO QoS SATISFACTION DEGREE           │
                              │◄───────────────────────────┘
                              ▼
                          ( END )
```

# FIG. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2004156312 A1
- US 6072787 A
- EP 0603099 A